# FASCICULE DE BREVET EUROPEEN

(11) **EP 1 441 527 B1**
(45) Date de publication et mention de la délivrance du brevet: **13.08.2008**
(21) Numéro de dépôt: 04290178.5
(22) Date de dépôt: 23.01.2004
(51) Int. Cl.: H04N 7/173, H04N 5/782, H04N 5/765, H04N 5/76

(54) **Procédé d'enregistrement, avec mise à jour, de contenus audiovisuels à diffusion programmée**
Verfahren, mit Update, zur Aufnahme von audiovisuellem Inhalt dessen Aussendung programmiert ist
Recording method, with update, for audiovisual content scheduled to be broadcasted

(30) Priorité: 27.01.2003 FR 0300883
(43) Date de publication de la demande: 28.07.2004
(73) Titulaire: FRANCE TELECOM, 75015 Paris (FR)
(72) Inventeur: Bertin, Christian, 35000 Rennes (FR); Campion, Sébastien, 35000 Rennes (FR); Amonou, Isabelle, 35235 Thorigne Fouillard (FR)
(74) Mandataire: Remy, Vincent Noel Paul

(56) Documents cités:
- US-A1- 2002 032 907
- US-A1- 2002 046 407
- US-A1- 2002 184 636
- US-B1- 6 208 799

## Description

La présente invention concerne un procédé d'enregistrement de contenus audiovisuels à diffusion programmée. Elle concerne également un système d'enregistrement de contenus audiovisuels à diffusion programmée, un serveur de présentation et un terminal d'accès pour la mise en oeuvre d'un tel procédé.

Par diffusion, on entend généralement une diffusion des contenus audiovisuels sur tout type de supports, tels que le satellite, le câble, la transmission hertzienne terrestre ou Internet.

Plus précisément l'invention concerne un procédé du type comportant :
- une étape de sélection, à partir d'un terminal d'accès, d'un contenu audiovisuel à enregistrer associé à une date et une heure de diffusion ;
- une étape de réception, par le terminal d'accès, d'un fichier d'enregistrement du contenu audiovisuel sélectionné, ce fichier contenant des informations d'identification du contenu audiovisuel et la date et l'heure prévues pour sa diffusion.

De tels procédés sont connus.
* : US 2002/032907A1 et US-B1-6208799 decrivent chacun un procédé d'enregistrement de contenus audiovisuels. Dans US-B1-6208799, les contenus audiovisuels sont à diffusion programmée.

Par exemple, il est possible de consulter un guide de programmes sur un site Web à partir d'un terminal d'accès connecté au réseau Internet. Ce site facilite en général la recherche et, finalement, avec un peu de navigation et le remplissage de critères de recherche montre toutes les informations disponibles sur le contenu qui intéresse l'utilisateur, notamment des informations d'identification du contenu audiovisuel et la date et l'heure prévues pour sa diffusion. Ces informations peuvent ensuite être téléchargées sur le terminal d'accès.

Il est également prévu de diffuser des contenus audiovisuels associés à des données de description. Le forum DVB (pour « Digital Video Broadcasting ») a spécifié le standard DVB-SI (pour « Service Information ») qui permet de diffuser des informations sur les contenus diffusés. Mais le plus souvent ces informations sont très limitées (Identifiant de la chaîne, Identifiant de l'émission, titre de l'émission, heure de début, heure de fin, contrôle parental...).

Enfin, les spécifications du forum TV Anytime proposent une solution pour l'enregistrement automatique de contenus audiovisuels associés à des données de description de ces contenus. Cependant, la solution proposée par TV Anytime est complexe et exige une puissance de traitement trop importante pour la plupart des terminaux d'accès actuels. Elle impose entre autre aux terminaux de pouvoir traduire et traiter des fichiers dont le format est imposé par TV Anytime. Ce format devient difficile à gérer pour un terminal grand-public, s'il souhaite par exemple obtenir d'un serveur une mise à jour du fichier d'enregistrement qu'il a reçu.

L'invention vise à remédier à ces inconvénients, en fournissant un procédé d'enregistrement de contenus audiovisuels à diffusion programmée capable de traiter des modifications de date et/ou d'heure de diffusion, ou même des annulations de diffusion, et qui propose une solution peu complexe n'exigeant pas une capacité de traitement trop importante de la part du terminal d'accès.

A cet effet, l'invention a pour objet un procédé du type précité, **caractérisé en ce que** le fichier d'enregistrement comporte en outre l'adresse d'un serveur de mise à jour, pour la génération d'une requête de mise à jour du fichier d'enregistrement émise par le terminal à destination de ce serveur de mise à jour.

Un procédé selon l'invention permet ainsi, grâce uniquement aux informations que contient le fichier d'enregistrement, de générer une requête simple vers un serveur de mise à jour qui, lui, dispose des capacités de traitement suffisantes pour interpréter cette requête, s'informer d'une nouvelle date et/ou heure de diffusion ou d'une annulation de diffusion et transmettre à destination du terminal d'accès, si nécessaire, des informations de mise à jour.

Un procédé selon l'invention peut en outre comporter l'une ou plusieurs des caractéristiques suivantes :
- il comporte une étape de mise à jour du fichier d'enregistrement, en cas de modification de la date et/ou de l'heure de diffusion, ou d'annulation de la diffusion du contenu audiovisuel sélectionné, ou de remplacement par un autre contenu audiovisuel ;
- la requête de mise à jour comporte l'adresse du serveur de mise à jour et les informations d'identification du contenu audiovisuel ;
- la requête est une requête du type HTTP ;
- la requête de mise à jour du fichier d'enregistrement est émise périodiquement par le terminal jusqu'à la date et l'heure prévues pour la diffusion du contenu audiovisuel sélectionné ;
- lors de l'étape de sélection on sélectionne un unique contenu audiovisuel, et la requête de mise à jour du fichier d'enregistrement est émise par le terminal avec une fréquence de plus en plus élevée lorsque l'on approche de la date et de l'heure de l'enregistrement du contenu audiovisuel sélectionné ;
- le fichier d'enregistrement comporte un champ repéré par une balise et définissant l'adresse du serveur de mise à jour ;
- le fichier d'enregistrement comporte au moins un champ repéré par une balise et définissant les informations d'identification du contenu audiovisuel correspondant associées à des données de description de ce contenu ;
- le fichier d'enregistrement comporte un champ repéré par une balise et définissant, pour un contenu audiovisuel donné de ce même fichier, un identifiant de contenu associé à un contenu déjà enregistré dans les moyens de stockage du terminal d'accès ;
- la syntaxe des fichiers échangés entre le terminal d'accès et le serveur est définie par un schéma de structure de données unique, notamment un schéma XML ;
- le procédé comporte une étape préalable de sélection d'une pluralité de contenus ayant un thème commun et une étape de réception d'un fichier de demande d'enregistrement à partir duquel le terminal d'accès génère une requête de demande d'enregistrement destinée à être émise vers un serveur prédéterminé, pour l'exécution automatique de l'étape de sélection ;
- le fichier de demande d'enregistrement comporte l'adresse dudit serveur prédéterminé, pour la génération de la requête de demande d'enregistrement ; et
- la requête comprend la référence d'un utilisateur à des fins statistiques.

L'invention a également pour objet un système d'enregistrement de contenus audiovisuels à diffusion programmée pour la mise en oeuvre d'un procédé tel que décrit précédemment, **caractérisé en ce qu**'il comporte au moins un terminal d'accès comportant des moyens de sélection d'un contenu audiovisuel à enregistrer associé à une date et une heure de diffusion, ledit terminal d'accès comportant des moyens de réception d'un fichier d'enregistrement du contenu audiovisuel sélectionné, ce fichier contenant des informations d'identification du contenu audiovisuel et la date et l'heure prévues pour sa diffusion, et en ce que le fichier d'enregistrement comporte en outre l'adresse d'un serveur de mise à jour, pour la génération d'une requête de mise à jour du fichier d'enregistrement émise par le terminal à destination de ce serveur de mise à jour.

L'invention a également pour objet un serveur de mise à jour pour la mise en oeuvre d'un procédé tel que décrit précédemment, **caractérisé en ce qu**'il comprend des moyens de mise à jour du fichier d'enregistrement..

Enfin, l'invention a également pour objet un terminal d'accès pour la mise en oeuvre d'un procédé tel que décrit précédemment, **caractérisé en ce qu**'il comporte des moyens de sélection d'un contenu audiovisuel à enregistrer associé à une date et une heure de diffusion, des moyens de réception d'un fichier d'enregistrement du contenu audiovisuel sélectionné, ce fichier contenant des informations d'identification du contenu audiovisuel et la date et l'heure prévues pour sa diffusion, et comportant en outre l'adresse d'un serveur de mise à jour, pour la génération d'une requête de mise à jour du fichier d'enregistrement émise par le terminal à destination de ce serveur de mise à jour.

L'invention sera mieux comprise à la lecture de la description qui va suivre, donnée uniquement à titre d'exemple et faite en se référant aux dessins annexés, dans lesquels :
- la figure 1 illustre schématiquement la structure générale d'un système d'enregistrement selon l'invention ;
- la figure 2 représente une page de présentation de contenus audiovisuels à diffusion programmée pouvant être enregistrés, selon un premier mode de réalisation de l'invention ;
- la figure 3 représente les étapes successives d'un procédé d'enregistrement selon le premier mode de réalisation de l'invention ;
- la figure 4 représente une page de présentation de contenus audiovisuels à diffusion programmée pouvant être enregistrés, selon un deuxième mode de réalisation de l'invention ; et
- la figure 5 représente les étapes successives d'un procédé d'enregistrement, selon le deuxième mode de réalisation de l'invention.

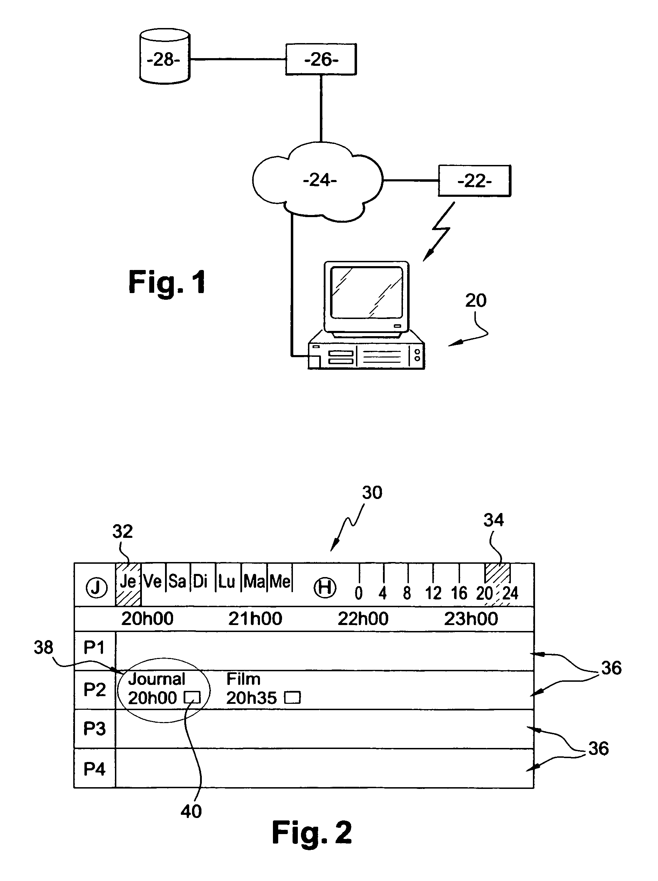

Le système représenté sur la figure 1 comporte un terminal 20 d'accès à des contenus audiovisuels émis par un diffuseur de programmes 22.

Le terminal d'accès 20 et le diffuseur 22 sont en outre connectés à un réseau de transmission d'informations, tel que par exemple le réseau Internet 24, ce qui leur permet d'échanger des informations avec un serveur 26 de présentation des contenus audiovisuels. Le terminal 20 est par ailleurs muni de moyens de stockage de contenus audiovisuels, notamment parmi ceux qui sont diffusés.

Le serveur de présentation 26 met à la disposition des utilisateurs du réseau Internet 24 des pages de présentation des contenus audiovisuels destinés à être diffusés par le diffuseur 22. Ces informations de description des contenus audiovisuels sont contenues dans une base de données 28 reliée au serveur de présentation 26, laquelle est régulièrement mise à jour par le diffuseur 22 via le serveur de présentation 26, lorsque par exemple des contenus audiovisuels sont déprogrammés ou ont une date ou une heure de programmation modifiée.

La page de présentation 30 représentée sur la figure 2 est gérée par le serveur 26 et est consultable par un utilisateur du terminal d'accès 20, à travers le réseau Internet 24.

Cette page de présentation 30 comporte les contenus audiovisuels à diffusion programmée, présentés à l'écran en fonction d'un jour 32 et d'un créneau horaire 34 sélectionnés. Sur cette page de présentation plusieurs lignes 36 correspondent à plusieurs chaînes de diffusion P1, P2, P3 et P4 associées chacune à une succession de contenus audiovisuels à diffusion programmée à des heures prédéterminées. Par exemple, un journal d'informations 38 est diffusé le jeudi entre 20h00 et 20h35 par la chaîne P2.

A chacun des contenus audiovisuels à diffusion programmée est associé un icone 40 permettant à l'utilisateur du terminal d'accès 20 de sélectionner ce contenu audiovisuel pour l'enregistrer dans les moyens de stockage du terminal d'accès 20.

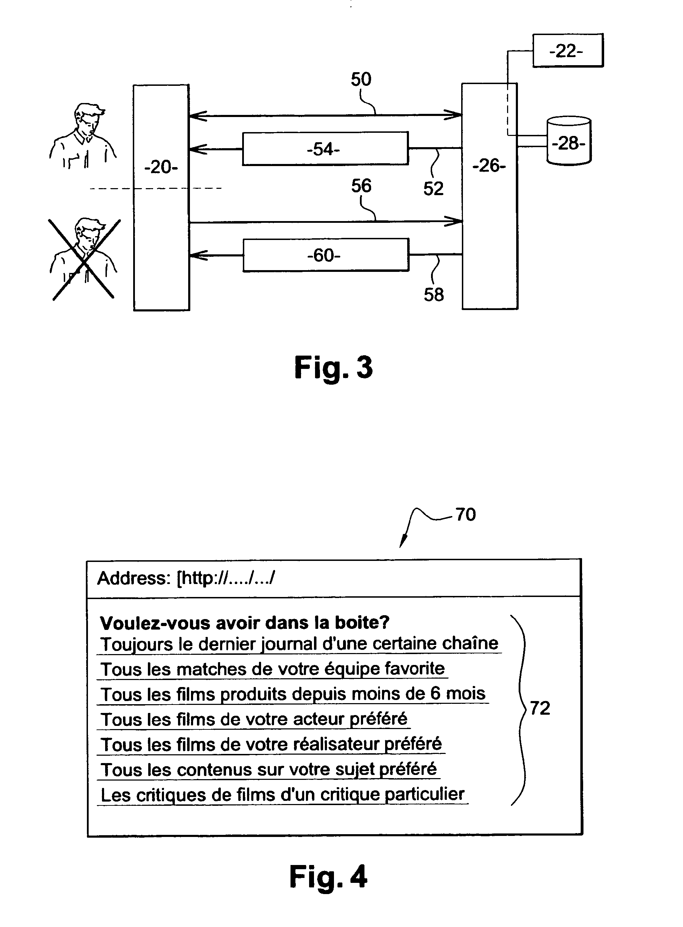

Le procédé d'enregistrement représenté sur la figure 3 comporte une première étape 50 au cours de laquelle l'utilisateur interagit avec la page de présentation 30 puis clique sur un ou plusieurs icones pour sélectionner un ou plusieurs contenus audiovisuels à diffusion programmée.

Suite à cette étape, le serveur de présentation 26 récupère les informations associées à ces contenus audiovisuels sélectionnés dans la base de données 28.

Il fournit ces informations au terminal d'accès 20, lors d'une étape 52, sous la forme d'un fichier d'enregistrement 54.

Ce fichier d'enregistrement 54 peut avoir la structure suivante, exprimée selon la syntaxe XML :

```
 <Record>
  <UpdateServerAddress>
     http://www.TVPortal.com\adrf3j2.FRG?
  </UpdateServerAddress>
  <RecordElement>
     <Contentld>
        Content n° 1
     </Contentld>
     <TVAMain>
       ...
        <Programlnformation Table>
           ...
        </ProgramlnformationTable>
        <Servicelnformation Table>
            ...
        </Servicelnformation Table>
        <ProgramLocation Table>
            <BroadcastEvent>
                ...
               serviceIDRef="34567"
               fragmentld="123"
              fragmentVersion="121214"
              ...
           </BroadcastEvent>
       </ProgramLocation Table>
       ...
    </TVAMain>
  </RecordElement>
  <RecordElement>
    <TVAMain>
       ...
    </TVAMain>
  </RecordElement>
 </Record>
```

Le fichier d'enregistrement comporte une balise « Record » de début (<Record>) et de fin (</Record>) de fichier. Entre ces deux balises, il comporte des données repérées par des balises de début et de fin, comme cela est prévu selon le format XML.

Parmi ces données, l'adresse universelle d'un serveur de mise à jour, repérée par une balise « UpdateServerAddress », est fournie par le fichier d'enregistrement pour permettre au terminal d'accès d'émettre ensuite des requêtes de demandes de mise à jour, en cas de modification de la date et/ou de l'heure de diffusion, d'annulation de la diffusion d'un contenu audiovisuel dont les données de description sont dans le fichier d'enregistrement, ou du remplacement d'un contenu audiovisuel du fichier d'enregistrement par un autre contenu audiovisuel. Dans cet exemple, l'adresse est celle du serveur de présentation 26, qui remplit également une fonction de mise à jour des fichiers d'enregistrement.

Le fichier d'enregistrement 54 comporte en outre des données d'informations relatives à un ou plusieurs contenus audiovisuels sélectionnés lors de l'étape 50. Pour chaque contenu audiovisuel, les données correspondantes sont repérées par une balise « RecordElement ». Dans l'exemple représenté ci-dessus, le fichier d'enregistrement comporte deux contenus audiovisuels sélectionnés. Il comporte donc deux champs repérés par la balise « RecordElement ». De façon plus générale, il peut en comporter un nombre quelconque.

Les données correspondant à un contenu audiovisuel sélectionné comportent de façon optionnelle un identifiant de contenu repéré par la balise « Contentld », si l'utilisateur a choisi d'enregistrer ce contenu audiovisuel à la place d'un autre contenu audiovisuel déjà enregistré dans les moyens de stockage du terminal d'accès 20 et identifié par le même identifiant de contenu.

Enfin, les données correspondant à un contenu audiovisuel comportent une table XML, repérée par une balise « TVAMain » et conforme aux spécifications du forum TV-Anytime. Cette table inclut généralement une sous-table ProgramInformation pour la description du contenu, une sous-table ServiceInformation pour la description du service portant le contenu, et une sous-table ProgramLocation pour la localisation du contenu (en temps et lieu), nécessaire à son enregistrement.

La sous-table ProgramLocation comprend, dans un champs « BroadcastEvent », un identifiant du service portant le contenu, noté « ServiceldRef », un identifiant du contenu, noté « fragmentld », et un identifiant de la version des informations associées au contenu, noté « fragmentVersion ».

De façon optionnelle, le fichier d'enregistrement peut aussi comprendre une référence de l'utilisateur. Dans ce cas, cette référence est repérée par une balise correspondante.

Ensuite, lors d'une étape 56, le terminal 20 génère une requête de mise à jour du fichier d'enregistrement à partir des informations contenues dans ce fichier. Cette requête comprend l'adresse du serveur 26 associée à l'identifiant « fragmentld » et à l'identifiant « fragmentVersion ». Elle peut prendre la forme concaténée suivante dans le cas d'une requête HTTP :
http://www.TVPortal.com\adrf3j2.FRG?fragmentld=123&fragmentVersion=121214

La requête peut de façon optionnelle, le cas échéant, comprendre également la référence de l'utilisateur à des fins statistiques.

Dès la réception de cette requête, le serveur de présentation et de mise à jour 26 vérifie les informations relatives au contenu correspondant à fragmentld=123 stockées dans la base de données 28 et leur identifiant de version.

Ensuite, lors d'une dernière étape 58, le serveur émet une réponse à cette requête de mise à jour. Cette réponse contient un fichier de mise à jour 60.

Ce fichier de mise à jour 60 peut avoir la structure suivante, exprimée selon la syntaxe XML :

```
 <UPDATE_ANSWER type= TYPE>
    <TVAMain>
       ...
        <ServicelnformationTable>
            ...
        </ServicelnformationTable>
        <ProgramLocationTable>
           <BroadcastEvent>
               ...
              serviceldRef="34567"
              fragmentld="123"
              fragmentVersion="121215"
              ...
           </BroadcastEvent>
        </ProgramLocationTable>
        ...
    </TVAMain>
 </UPDATE_ANSWER>
```

Si l'identifiant de version des données de la base correspond à l'identifiant de version de la requête, cela signifie que les informations associées au contenu audiovisuel à enregistrer n'ont pas changé. Dans ce cas, on identifie le fichier de mise à jour 60 par la valeur TYPE= « Unmodified », indiquant que la diffusion du contenu correspondant n'est pas modifiée.

Si l'identifiant de version des données de la base a une valeur supérieure à l'identifiant de la version de la requête, cela signifie que les informations associées au contenu audiovisuel ont été mises à jour depuis la transmission du fichier d'enregistrement 54. Dans ce cas, on identifie le fichier de mise à jour 60 par la valeur TYPE= « New-version », indiquant que les données de description du contenu correspondant ont été modifiée.

Dès réception de ce fichier, le terminal d'accès remplace la table « TVAMain » correspondante dans le fichier d'enregistrement 54. Notamment, si la date et/ou l'heure d'enregistrement a été modifiée par le diffuseur 22, cette mise à jour permet au terminal d'accès d'en tenir compte pour le démarrage de l'enregistrement.

Au cas ou le contenu sélectionné a été remplacé, par le serveur 26, par un autre contenu audiovisuel, on identifie le fichier de mise à jour 60 par la valeur TYPE= « New-content », indiquant que le contenu audiovisuel à enregistrer est modifié. Dans ce cas, comme dans le précédent, on remplace la table« TVAMain » correspondante dans le fichier d'enregistrement 54.

Au cas où le contenu sélectionné a été supprimé par le serveur 26, on identifie le fichier de mise à jour 60 par la valeur TYPE= « Cancelled », indiquant que le contenu audiovisuel à enregistrer est supprimé. Dans ce cas, l'enregistrement est annulé.

Enfin, au cas où le serveur ne retrouve pas le contenu sélectionné dans la base de données 28, on identifie le fichier de mise à jour 60 par la valeur TYPE= « Unknown », indiquant que le contenu audiovisuel à enregistrer n'a pas été retrouvé. Dans ce cas l'enregistrement est annulé.

Les étapes 56 et 58 sont répétées plusieurs fois, par exemple régulièrement toutes les quatre heures, jusqu'à l'heure d'enregistrement du ou des contenus audiovisuels concernés.

Une alternative consiste à répéter plusieurs fois les étapes 56 et 58 avec une fréquence de plus en plus élevée lorsque l'on approche de la date et de l'heure de l'enregistrement du contenu audiovisuel sélectionné. Bien sûr, cette alternative est adaptée au cas où l'on sélectionne un unique contenu audiovisuel.

La page de présentation 70 représentée sur la figure 4 est gérée par le serveur 26 et est consultable par un utilisateur du terminal d'accès 20, à travers le réseau Internet 24. Elle permet la mise en oeuvre d'un deuxième mode de réalisation de l'invention.

Cette page de présentation 70 comporte une liste 72 de commandes d'enregistrement, chaque commande permettant l'enregistrement d'un ensemble de contenus ayant un thème commun. Par exemple, une telle commande concerne « toujours le dernier journal d'un certaine chaîne », « tous les matches de votre équipe favorite », « tous les films produits depuis moins de six mois », « tous les films avec votre acteur préféré », « tous les films de votre réalisateur préféré », « tous les contenus sur votre sujet préféré », « les critiques de films d'un critique particulier ».

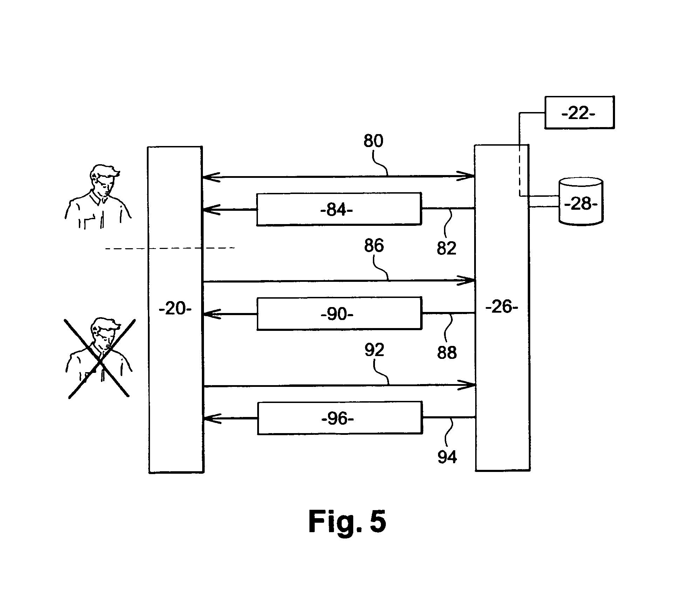

Le procédé de demande d'enregistrement représenté sur la figure 5 comporte une première étape 80 au cours de laquelle l'utilisateur interagit avec la page de présentation 70 puis clique sur l'une des commandes d'enregistrement de la liste 72.

Suite à cette étape, le serveur de présentation 26 récupère les informations associées aux contenus audiovisuels dont le thème correspond à la commande d'enregistrement sélectionnée. Ces informations sont stockées dans la base de données 28.

Il fournit ensuite ces informations au terminal d'accès 20, lors d'une étape 52, sous la forme d'un fichier de demande d'enregistrement 84.

Ce fichier de demande d'enregistrement 84 peut avoir la structure suivante, exprimée selon la syntaxe XML :

```
 <RecordRequest>
  <RecordRequestServerAddress>
     http:\\www.TVPortal.com\adrf3j2.REC
  </RecordRequestServerAddress>
  <Periodicity>
     04:00:00
  </Periodicity>
 </RecordRequest>
```

Le fichier de demande d'enregistrement 84 comporte une balise "RecordRequest" de début (<RecordRequest>) et de fin (</RecordRequest>) de fichier. Entre ces deux balises, il comporte des données repérées par des balises de début et de fin, comme cela est prévu selon le standard XML.

Parmi ces données, l'adresse universelle d'un serveur de mise à jour, repérée par une balise "RecordRequestServerAdress", est fournie par le fichier de demande d'enregistrement pour permettre au terminal d'accès 20 d'émettre ensuite des requêtes de demande de mise à jour du fichier de demande d'enregistrement. Dans cet exemple, comme dans l'exemple précédent, l'adresse est celle du serveur de présentation 26, qui remplit également une fonction de mise à jour des fichiers de demande d'enregistrement.

Le fichier de demande d'enregistrement 84 comporte en outre de façon optionnelle une information de périodicité repérée par une balise "Periodicity" pour indiquer au terminal d'accès 20 une période d'émission de requêtes de mise à jour. Dans cet exemple, le serveur de présentation 26 demande à être contacté toutes les 4 heures.

Ensuite, lors d'une étape 86 répétée automatiquement de façon périodique selon la périodicité indiquée par le champ "Périodicity", le terminal 20 émet une requête vers le serveur de présentation 26 dont l'adresse figure dans le fichier de demandes d'enregistrement 84. Cette adresse comporte une précision permettant au serveur de présentation 26 de déterminer la commande d'enregistrement qui a été choisie par l'utilisateur.

La requête peut prendre les deux formes suivantes :
http:\\www.TVPortal.com\adrf3j2.REC
   ou
http:\\www.TVPortal.com\adrf3j2.REC?MaxRecNb=2.

Comme cela est indiqué dans les deux exemples ci-dessus, la requête de mise à jour comporte de façon optionnelle une variable "MaxRecNb" qui précise le nombre de contenus audiovisuels successifs correspondant au thème commandé, que le terminal d'accès 20 doit enregistrer. Dans un premier cas, si cette variable n'est pas jointe à la requête, la demande d'enregistrement correspond à une demande d'enregistrement du premier contenu audiovisuel correspondant au thème sélectionné. Dans le deuxième cas, la variable "MaxRecNb" est égale à 2, c'est-à-dire que la demande d'enregistrement concerne l'enregistrement de deux contenus audiovisuels successifs correspondant au thème sélectionné.

En réponse, lors d'une étape 88, le terminal d'accès 20 reçoit un fichier d'enregistrement 90, similaire au fichier d'enregistrement 54, comportant les contenus audiovisuels correspondant à la demande d'enregistrement thématique émise par l'utilisateur.

Si l'étape 86 est répétée périodiquement, lors de l'étape 88 suivante, la réponse émise par le serveur de présentation 26 est un fichier de mise à jour tel qu'il a été décrit précédemment lors de l'étape 58.

Comme précédemment, le fichier de mise à jour peut être du type « New_version », « Unmodified », « New_content », « Cancelled », ou « Unknown » selon les cas.

Si des modifications de date et/ou d'heure de programmation de contenus audiovisuels sont apportées par le diffuseur 22, ceci ayant pour conséquence une modification de la base de données 28, l'émission répétée de requêtes lors de l'étape 86 permet de mettre à jour le fichier 90 d'enregistrement. Notamment, cela permet de modifier les contenus audiovisuels à enregistrer, au cas où un nouveau contenu audiovisuel viendrait à être programmé avant le prochain contenu audiovisuel à programmer dans le thème choisi.

Les étapes suivantes 92 et 94, ainsi que le fichier de mise à jour 96 sont similaires aux étapes 56 et 58, ainsi qu'au fichier de mise à jour 60. Pour cette raison, ces étapes et ce fichier ne seront pas décrits davantage.

Dans les exemples fournis sur la figure 4, si l'utilisateur sélectionne la commande d'enregistrement correspondant à "Toujours le dernier journal d'une certaine chaîne", le fichier de demandes d'enregistrement 84 peut prendre la forme suivante :

```
 <RecordRequest>
  <RecordRequestServerAddress>
    http:\\www.TVPortal.com\lastNewsOfBBC.REC
  </RecordRequestServerAddress>
  <Periodicity>
    04:00:00
  </Periodicity>
 </RecordRequest>
```

Ce fichier de demande d'enregistrement comporte l'adresse du serveur 26 avec la précision concernant le thème du dernier journal de la chaîne BBC. La périodicité de mise à jour d'un fichier d'enregistrement correspondant est de quatre heures. Le terminal d'accès 20 consulte alors le serveur de présentation :
http:\\www.TVPortal.com\lastNewsOfBBC.REC,
qui lui renvoie le fichier 90 suivant :

```
 <Record>
  <UpdateServerAddress>
     http:\\www.TVPortal.com\lastNewsOfBBC.REC
  </UpdateServerAddress>
  <RecordElement>
     <Contentld>
        Content n°1
     </Contentld>
     <TVAMain>
        <ProgramDescription>
            <ProgramlnformationTable version="2">
               <Programlnformation>
                   programld="crid://www.bbc.co.uk/News19122002"
                   <BasicDescription>
                      <Title>
                          BBC News
                      </Title>
                      <Synopsis>
                          News of the day
                      </Synopsis>
                      <Genre href=":x:x">
                          <mpeg7:Name>
                             News
                          </mpeg7:Name>
                      </Genre>
                   </BasicDescription>
               </Programlnformation>
            </ProgramlnformationTable>
            <ProgramLocationTable version="2">
               <Schedule>
                   <Event>
                      <Program crid="crid://www.bbc.co.uk/News19122002-20H00"/>
                      <EventDescription>
                          <PublishedTime>
                            2002-12-19T20:00:00-00:00
                         </PublishedTime>
                         <PublishedDuration>
                            P0Y0M0DT0H45M
                         </PublishedDuration>
                     </EventDescription>
                  </Event>
                  <Serviceld id=" 123"/>
               </Schedule>
           </ProgramLocationTable>
           <ServicelnformationTable>
               <ServiceInformation serviceld="123">
                  <Name>BBC News</Name>
                  <Owner>BBC</Owner>
               </ServiceInformation>
           </ServicelnformationTable>
        </ProgramDescription>
    </TVAMain>
  </RecordElement>
 </Record>
```

Dès la réception de ce fichier d'enregistrement 90, le terminal d'accès est automatiquement configuré pour enregistrer le ou les contenus audiovisuels correspondants aux dates et heures indiquées dans le fichier.

Au bout de quatre heures, que le terminal ait déjà enregistré un journal ou non, il émet la requête de mise à jour précitée. Si une nouvelle version du fichier d'enregistrement est envoyée par le serveur, il reprogramme un enregistrement. Les étapes 56 et 58 sont alors de nouveau répétées.

Si, comme cela est possible d'après les exemples indiqués sur la figure 4, l'utilisateur sélectionne la commande d'enregistrement « Tous les matches de votre équipe favorite », le serveur de présentation renvoie par exemple le fichier de demande d'enregistrement suivant :

```
 <RecordRequest>
  <RecordRequestServerAddress>
     http://www.TVPortal.com\AllManchesterFootballMatch.REC
  </RecordRequestServerAddress>
  <Periodicity>
    24:00:00
  </Periodicity>
 </RecordRequest>
```

Ce fichier de demande d'enregistrement comporte l'adresse du serveur 26 avec la précision concernant le thème des matches joués par le club de Manchester, si cette équipe est l'équipe favorite de l'utilisateur. La périodicité de mise à jour d'un fichier d'enregistrement correspondant est de vingt-quatre heures.

Ce fichier d'enregistrement peut prendre la forme suivante :

```
 <Record>
  <UpdateServerAddress>
     http.\\www.TVPortal.com\AllManchesterFootballMatch.REC
  </UpdateServerAddress>
  <RecordElement>
     <TVAMain>
        <Prog ram Description>
           <ProgramlnformationTable version="2">
               <Programlnformation programld =
                   "crid://www.bbc.co.uk/ManchesterVsLiverpool2002-back">
                   <BasicDescription>
                      <Title>
                         Manchester vs Liverpool
                         England Championship - 2002 - back match
                      </Title>
                      <Synopsis>
                         After the first match between Liverpool Manchester,
                         where Liverpool win 1-0 the Manchester football club should
                         win to make the final
                      </Synopsis>
                     <Genre href=":x:x">
                         <mpeg7:Name>Sport/football</mpeg7:Name>
                      </Genre>
                   </BasicDescription>
               </Programlnformation>
            </ProgramlnformationTable>
            <ProgramLocationTable version="2">
               <Schedule>
                  <Event>
                     <Program crid =
                         "crid:llwww.bbc.co.uk/ManchesterVsLiverpool2002-back"/>
                     <EventDescription>
                         <PublishedTime>
                            2002-12-19T21:00:00-00:00
                         </PublishedTime>
                         <PublishedDuration>
                             P0Y0M0DT0H100M
                         </PublishedDuration>
                      </EventDescription>
                  </Event>
                  <Serviceld id="123"/>
               </Schedule>
           </ProgramLocationTable>
           <ServicelnformationTable>
               <Servicelnformation serviceld="123">
                  <Name>BBC Sport</Name>
                  <Owner>BBC</Owner>
               </Servicelnformation>
           </ServicelnformationTable>
        </ProgramDescription>
     </TVAMain>
  </RecordElement>
 </Record>
```

Dès la réception de ce fichier d'enregistrement 90, le terminal d'accès est automatiquement configuré pour enregistrer le ou les contenus audiovisuels correspondants aux dates et heures indiquées dans le fichier.

Au bout de vingt-quatre heures, que le terminal ait déjà enregistré un match ou non, il émet la requête de mise à jour précitée. Si une nouvelle version du fichier d'enregistrement est envoyée par le serveur, il reprogramme un enregistrement. Les étapes 56 et 58 sont alors de nouveau répétées.

Si, comme cela est possible d'après les exemples indiqués sur la figure 4, l'utilisateur sélectionne l'une des commandes d'enregistrement « Tous les films produits depuis moins de 6 mois », « Tous les films de votre acteur préféré », « Tous les films de votre réalisateur préféré », « Tous les contenus sur votre sujet préféré », « Les critiques de films d'un critique particulier », les fichiers retournés par le serveur sont similaires aux deux cas mentionnés précédemment.

Un exemple précis de schéma XML structurant la syntaxe du fichier d'enregistrement 54 ou 90 est représenté ci-dessous :

```
 <?xml version="1.0" encoding="UTF-8"?>
 <xs:schema xmlns:tva="http://www.tv-anytime.org/2001/08/metadata"
 xmlns:mpeg7="urn:mpeg:mpeg7:schema:2001 "
 xmlns:xs="http://www.w3.org/2001/XMLSchema" elementFormDefault="qualified"
 attributeFormDefault="unqualified">
  <!--<import namespace="http://www.tv-anytime.org/2001/08/metadata"
 schemaLocation="./tva_metadata_v11.xsd"/>-->
  <xs:element name="Record" type="RecordType">
    <xs:annotation>
        <xs:documentation xml:lang="fr">
           Cet élément est la racine du fichier xx.REC
        </xs:documentation>
    </xs:annotation>
  </xs:element>
  <xs:complexType name="RecordType">
    <xs:sequence>
        <xs:element name="UpdateServerAddress" type="xs:anyType">
           <xs:annotation>
               <xs:documentation xml:lang="fr">
                  Cette balise contient l'adresse universelle qui servira au terminal
                  pour consulter les éventuels changements qui auront eu lieu pour
                  les émissions prévues en enregistrement
               </xs:documentation>
           </xs:annotation>
        </xs:element>
        <xs:sequence maxOccurs="unbounded">
           <xs:element name="RecordElement">
               <xs:annotation>
                  <xs:documentation xml:lang="fr">
                      Cet element represente un enregistrement de l'utilisateur, il
                      contient un noeud TVAMain. Ce noeud TVA doit contenir le
                      minimum pour permettre un enregistrement c'est a dire une
                     ProgramlnformationTable, une ServicelnformationTable, une
                     ProgramLocationTable
                  </xs:documentation>
              </xs:annotation>
              <xs:complexType>
                  <xs:sequence>
                     <xs:element ref="tva:TVAMain"/>
                     <xs:element name="Contenld" minOccurs="0">
                        <xs:annotation>
                            <xs:documentation xml:lang="fr">
                                Cet element, s'il est présent indique au terminal qu'il
                                s'agit d'un contenu qui doit remplacer un contenu
                                présent sur son disque portant le même identifiant
                            </xs:documentation>
                         </xs:annotation>
                     </xs:element>
                  </xs:sequence>
              </xs:complexType>
           </xs:element>
       </xs:sequence>
    </xs:sequence>
  </xs:complexType>
 </xs:schema>
```

Un exemple précis de schéma XML structurant la syntaxe du fichier de demande d'enregistrement 84 est représenté ci-dessous :

```
 <?xml version="1.0" encoding="UTF-8"?>
 <xs:schema xmlns:xs="http://www.w3.org/2001/XMLSchema"
 elementFormDefault="qualified" attributeFormDefault="unqualified">
  <xs:element name="RecordRequest" type="RecordRequestType">
    <xs:annotation>
        <xs:documentation>Element racine du document</xs:documentation>
    </xs:annotation>
  </xs:element>
  <xs:complexType name="RecordRequestType">
    <xs:sequence>
        <xs:element name="RecordRequestServerAddress" type="xs:anyURI">
           <xs:annotation>
               <xs:documentation>
                  Cet élément contient l'adresse universelle à laquelle le terminal doit
                  se connecter pour obtenir une mise a jour des informations de
                  programmation
               </xs:documentation>
           </xs:annotation>
        </xs:element>
        <xs:element name="Periodicity" type="xs:duration" minOccurs="0">
           <xs:annotation>
               <xs:documentation>
                  Cet élément contient la période à laquelle doit se référer le terminal
                  pour effectuer ses mises à jour
               </xs:documentation>
           </xs:annotation>
        </xs:element>
    </xs:sequence>
  </xs:complexType>
 </xs:schema>
```

## Revendications

1. Procédé d'enregistrement de contenus audiovisuels à diffusion programmée, comportant :
- une étape (50 ; 86) de sélection, à partir d'un terminal d'accès (20), d'un contenu audiovisuel à enregistrer associé à une date et une heure de diffusion ;
- une étape (52 ; 88) de réception, par le terminal d'accès, d'un fichier (54 ; 90) d'enregistrement du contenu audiovisuel sélectionné, ce fichier contenant des informations d'identification du contenu audiovisuel et la date et l'heure prévues pour sa diffusion,
**caractérisé en ce que** le fichier d'enregistrement comporte en outre l'adresse d'un serveur de mise à jour (26), pour la génération (56 ; 92) d'une requête de mise à jour du fichier d'enregistrement émise par le terminal à destination de ce serveur de mise à jour.

2. Procédé d'enregistrement de contenus audiovisuels à diffusion programmée selon la revendication 1, **caractérisé en ce qu'**il comporte une étape (58 ; 94) de mise à jour du fichier d'enregistrement (54 ; 90), en cas de modification de la date et/ou de l'heure de diffusion, ou d'annulation de la diffusion du contenu audiovisuel sélectionné, ou de remplacement par un autre contenu audiovisuel.

3. Procédé d'enregistrement de contenus audiovisuels à diffusion programmée selon la revendication 1 ou 2, **caractérisé en ce que** la requête de mise à jour comporte l'adresse du serveur de mise à jour (26) et les informations d'identification du contenu audiovisuel.

4. Procédé d'enregistrement de contenus audiovisuels à diffusion programmée selon l'une quelconque des revendications 1 à 3, **caractérisé en ce que** la requête est une requête du type HTTP.

5. Procédé d'enregistrement de contenus audiovisuels à diffusion programmée selon l'une quelconque des revendications 1 à 4, **caractérisé en ce que** la requête de mise à jour du fichier d'enregistrement (54 ; 90) est émise périodiquement par le terminal (20) jusqu'à la date et l'heure prévues pour la diffusion du contenu audiovisuel sélectionné.

6. Procédé d'enregistrement de contenus audiovisuels à diffusion programmée selon l'une quelconque des revendications 1 à 4, **caractérisé en ce que** lors de l'étape de sélection (50 ; 86) on sélectionne un unique contenu audiovisuel, et **en ce que** la requête de mise à jour du fichier d'enregistrement (54) est émise par le terminal (20) avec une fréquence de plus en plus élevée lorsque l'on approche de la date et de l'heure de l'enregistrement du contenu audiovisuel sélectionné.

7. Procédé d'enregistrement de contenus audiovisuels à diffusion programmée selon l'une quelconque des revendications 1 à 6, **caractérisé en ce que** le fichier d'enregistrement (54 ; 90) comporte un champ repéré par une balise et définissant l'adresse du serveur de mise à jour.

8. Procédé d'enregistrement de contenus audiovisuels à diffusion programmée selon l'une quelconque des revendications 1 à 7, **caractérisé en ce que** le fichier d'enregistrement (54 ; 90) comporte au moins un champ repéré par une balise et définissant les informations d'identification du contenu audiovisuel correspondant associées à des données de description de ce contenu.

9. Procédé d'enregistrement de contenus audiovisuels à diffusion programmée selon l'une quelconque des revendications 1 à 8, **caractérisé en ce que** le fichier d'enregistrement (54 ; 90) comporte un champ repéré par une balise et définissant, pour un contenu audiovisuel donné de ce même fichier, un identifiant de contenu associé à un contenu déjà enregistré dans les moyens de stockage du terminal d'accès.

10. Procédé d'enregistrement de contenus audiovisuels à diffusion programmée selon l'une quelconque des revendications 1 à 9, **caractérisé en ce que** la syntaxe des fichiers échangés entre le terminal d'accès et le serveur est définie par un schéma de structure de données unique, notamment un schéma XML.

11. Procédé d'enregistrement de contenus audiovisuels à diffusion programmée selon l'une quelconque des revendications 1 à 10, **caractérisé en ce qu'**il comporte une étape préalable (80) de sélection d'une pluralité de contenus ayant un thème commun et une étape (82) de réception d'un fichier de demande d'enregistrement (84) à partir duquel le terminal d'accès génère une requête de demande d'enregistrement destinée à être émise vers un serveur prédéterminé (26), pour l'exécution automatique de l'étape de sélection (86).

12. Procédé d'enregistrement de contenus audiovisuels à diffusion programmée selon la revendication 11, **caractérisé en ce que** le fichier de demande d'enregistrement (84) comporte l'adresse dudit serveur prédéterminé, pour la génération de la requête de demande d'enregistrement.

13. Procédé d'enregistrement de contenus audiovisuels à diffusion programmée selon l'une quelconque des revendications 1 à 12, **caractérisé en ce que** la requête comprend la référence d'un utilisateur à des fins statistiques.

14. Système d'enregistrement de contenus audiovisuels à diffusion programmée pour la mise en oeuvre d'un procédé selon l'une quelconque des revendications 1 à 13, **caractérisé en ce qu'**il comporte au moins un terminal d'accès (20) comportant des moyens de sélection d'un contenu audiovisuel à enregistrer associé à une date et une heure de diffusion, ledit terminal d'accès comportant des moyens de réception d'un fichier d'enregistrement (54 ; 90) du contenu audiovisuel sélectionné, ce fichier contenant des informations d'identification du contenu audiovisuel et la date et l'heure prévues pour sa diffusion, et **en ce que** le fichier d'enregistrement comporte en outre l'adresse d'un serveur de mise à jour (26), pour la génération d'une requête de mise à jour du fichier d'enregistrement émise par le terminal à destination de ce serveur de mise à jour.

15. Serveur de mise (26) à jour spécialemen adapté pour la mise en oeuvre d'un procédé selon l'une quelconque des revendications 1 à 13, **caractérisé en ce qu'**il comprend des moyens de mise à jour du fichier d'enregistrement.

16. Terminal d'accès 20) specialement adapté pour la mise en oeuvre d'un procédé selon l'une quelconque des revendications 1 à 13, **caractérisé en ce qu'**il comporte des moyens de sélection d'un contenu audiovisuel à enregistrer associé à une date et une heure de diffusion, des moyens de réception d'un fichier d'enregistrement du contenu audiovisuel sélectionné, ce fichier contenant des informations d'identification du contenu audiovisuel et la date et l'heure prévues pour sa diffusion, et comportant en outre l'adresse d'un serveur de mise à jour, pour la génération d'une requête de mise à jour du fichier d'enregistrement émise par le terminal à destination de ce serveur de mise à jour.

## Claims

1. Method for recording audiovisual contents programmed for broadcasting, comprising:
- a step (50; 86) of selecting, from an access terminal (20), an audiovisual content to be recorded associated with a broadcasting date and time;
- a step (52; 88) of receiving, by the access terminal, a recording file (54; 90) of the selected audiovisual content, this file containing information identifying the audiovisual content and the date and time scheduled for its broadcasting,
**characterized in that** the recording file furthermore comprises the address of an updating server (26), for the generation (56; 92) of a request to update the recording file, sent by the terminal to this updating server.

2. Method for recording audiovisual contents programmed for broadcasting according to Claim 1, **characterized in that** it comprises a step (58; 94) of updating the recording file (54; 90), in the event of modification of the broadcasting date and/or time, or of cancellation of the broadcasting of the selected audiovisual content, or of replacement by another audiovisual content.

3. Method for recording audiovisual contents programmed for broadcasting according to Claim 1 or 2, **characterized in that** the update request comprises the address of the updating server (26) and the information identifying the audiovisual content.

4. Method for recording audiovisual contents programmed for broadcasting according to any one of Claims 1 to 3, **characterized in that** the request is a request of the HTTP type.

5. Method for recording audiovisual contents programmed for broadcasting according to any one of Claims 1 to 4, **characterized in that** the request to update the recording file (54; 90) is sent periodically by the terminal (20) until the date and time scheduled for the broadcasting of the selected audiovisual content.

6. Method for recording audiovisual contents programmed for broadcasting according to any one of Claims 1 to 4, **characterized in that** during the selection step (50; 86) a single audiovisual content is selected, and **in that** the request to update the recording file (54) is sent by the terminal (20) with an increasingly high frequency as the date and time of recording of the selected audiovisual content are approached.

7. Method for recording audiovisual contents programmed for broadcasting according to any one of Claims 1 to 6, **characterized in that** the recording file (54; 90) comprises a field marked by a tag and defining the address of the updating server.

8. Method for recording audiovisual contents programmed for broadcasting according to any one of Claims 1 to 7, **characterized in that** the recording file (54; 90) comprises at least one field marked by a tag and defining the information identifying the corresponding audiovisual content and associated with data describing this content.

9. Method for recording audiovisual contents programmed for broadcasting according to any one of Claims 1 to 8, **characterized in that** the recording file (54; 90) comprises a field marked by a tag and defining, for a given audiovisual content of this same file, a content identifier associated with a content already recorded in the storage means for the access terminal.

10. Method for recording audiovisual contents programmed for broadcasting according to any one of Claims 1 to 9, **characterized in that** the syntax of the files exchanged between the access terminal and the server is defined by a unique data structure scheme, in particular an XML scheme.

11. Method for recording audiovisual contents programmed for broadcasting according to any one of Claims 1 to 10, **characterized in that** it comprises a prior step (80) of selecting a plurality of contents having a common topic and a step (82) of receiving a recording requisition file (84) on the basis of which the access terminal generates a recording requisition request intended to be sent to a predetermined server (26), for the automatic execution of the selection step (86).

12. Method for recording audiovisual contents programmed for broadcasting according to Claim 11, **characterized in that** the recording requisition file (84) comprises the address of the said predetermined server, for the generation of the recording requisition request.

13. Method for recording audiovisual contents programmed for broadcasting according to any one of Claims 1 to 12, **characterized in that** the request comprises the reference of a user for statistical purposes.

14. System for recording audiovisual contents programmed for broadcasting for the implementation of a method according to any one of Claims 1 to 13,
**characterized in that** it comprises at least one access terminal (20) comprising means for selecting an audiovisual content to be recorded associated with a broadcasting date and time, the said access terminal comprising means for receiving a recording file (54; 90) of the selected audiovisual content, this file containing information identifying the audiovisual content and the date and time scheduled for its broadcasting, and **in that** the recording file furthermore comprises the address of an updating server (26), for the generation of a request to update the recording file, sent by the terminal to this updating server.

15. Updating server (26) specially adapted for the implementation of a method according to any one of Claims 1 to 13, **characterized in that** it comprises means for updating the recording file.

16. Access terminal (20) specially adapted for the implementation of a method according to any one of Claims 1 to 13, **characterized in that** it comprises means for selecting an audiovisual content to be recorded associated with a broadcasting date and time, means for receiving a recording file of the selected audiovisual content, this file containing information identifying the audiovisual content and the date and time scheduled for its broadcasting, and furthermore comprising the address of an updating server, for the generation of a request to update the recording file, sent by the terminal to this updating server.

## Patentansprüche

1. Verfahren zum Aufzeichnen audiovisueller Inhalte mit programmierter Ausstrahlung, das enthält:
- einen Schritt (50; 86), um von einem Zugriffsendgerät (20) einen aufzuzeichnenden audiovisuellen Inhalt, dem ein Datum und eine Uhrzeit der Ausstrahlung zugeordnet sind, auszuwählen;
- einen Schritt (52; 88), um durch das Zugriffsendgerät eine Aufzeichnungsdatei (54; 90) des ausgewählten audiovisuellen Inhalts zu empfangen, wobei diese Datei Informationen für die Identifizierung des audiovisuellen Inhalts und das Datum und die Uhrzeit, die für seine Ausstrahlung vorgesehen sind, enthält,
**dadurch gekennzeichnet, dass** die Aufzeichnungsdatei außerdem die Adresse eines Aktualisierungsservers (26) für die Erzeugung (56; 92) einer Anforderung zur Aktualisierung der Aufzeichnungsdatei, die von dem Endgerät zu diesem Aktualisierungsserver ausgesendet wird, enthält.

2. Verfahren zum Aufzeichnen audiovisueller Inhalte mit programmierter Ausstrahlung nach Anspruch 1, **dadurch gekennzeichnet, dass** es einen Schritt (58; 94) des Aktualisierens der Aufzeichnungsdatei (54; 90) im Fall einer Modifizierung des Datums und/oder der Uhrzeit der Ausstrahlung oder der Annullierung der Ausstrahlung des ausgewählten audiovisuellen Inhalts oder des Ersetzens durch einen anderen audiovisuellen Inhalt enthält.

3. Verfahren zum Aufzeichnen audiovisueller Inhalte mit programmierter Ausstrahlung nach Anspruch 1 oder 2, **dadurch gekennzeichnet, dass** die Aktualisierungsanforderung die Adresse des Aktualisierungsservers (26) und die Informationen für die Identifizierung des audiovisuellen Inhalts enthält.

4. Verfahren zum Aufzeichnen audiovisueller Inhalte mit programmierter Ausstrahlung nach einem der Ansprüche 1 bis 3, **dadurch gekennzeichnet, dass** die Anforderung eine Anforderung des HTTP-Typs ist.

5. Verfahren zum Aufzeichnen audiovisueller Inhalte mit programmierter Ausstrahlung nach einem der Ansprüche 1 bis 4, **dadurch gekennzeichnet, dass** die Anforderung zum Aktualisieren der Aufzeichnungsdatei (54; 90) von dem Endgerät (20) periodisch bis zu dem Datum und der Uhrzeit, die für die Ausstrahlung des ausgewählten audiovisuellen Inhalts vorgesehen sind, ausgesendet wird.

6. Verfahren zum Aufzeichnen audiovisueller Inhalte mit programmierter Ausstrahlung nach einem der Ansprüche 1 bis 4, **dadurch gekennzeichnet, dass** im Auswahlschritt (50; 86) ein einziger audiovisueller Inhalt ausgewählt wird und dass die Anforderung zum Aktualisieren der Aufzeichnungsdatei (54) durch das Endgerät (20) mit einer Häufigkeit ausgesendet wird, die bei Annäherung an das Datum und an die Uhrzeit der Aufzeichnung des ausgewählten audiovisuellen Inhalts immer höher wird.

7. Verfahren zum Aufzeichnen audiovisueller Inhalte mit programmierter Ausstrahlung nach einem der Ansprüche 1 bis 6, **dadurch gekennzeichnet, dass** die Aufzeichnungsdatei (54; 90) ein Feld enthält, das durch eine Markierung **gekennzeichnet** ist und die Adresse des Aktualisierungsservers definiert.

8. Verfahren zum Aufzeichnen audiovisueller Inhalte mit programmierter Ausstrahlung nach einem der Ansprüche 1 bis 7, **dadurch gekennzeichnet, dass** die Aufzeichnungsdatei (54; 90) wenigstens ein Feld enthält, das durch eine Markierung **gekennzeichnet** ist und die Informationen für die Identifizierung des entsprechenden audiovisuellen Inhalts, denen Beschreibungsdaten für diesen Inhalt zugeordnet sind, definiert.

9. Verfahren für die Aufzeichnung audiovisueller Inhalte mit programmierter Ausstrahlung nach einem der Ansprüche 1 bis 8, **dadurch gekennzeichnet, dass** die Aufzeichnungsdatei (54; 90) ein Feld enthält, das durch eine Markierung **gekennzeichnet** ist und für einen gegebenen audiovisuellen Inhalt derselben Datei einen Identifizierer des Inhalts, der einem in den Speichermitteln des Zugriffsendgeräts bereits aufgezeichneten Inhalt zugeordnet ist, definiert.

10. Verfahren zum Aufzeichnen audiovisueller Inhalte mit programmierter Ausstrahlung nach einem der Ansprüche 1 bis 9, **dadurch gekennzeichnet, dass** die Syntax von Dateien, die zwischen dem Zugriffsendgerät und dem Server ausgetauscht werden, durch ein eindeutiges Datenstrukturschema, insbesondere ein XML-Schema, definiert ist.

11. Verfahren zum Aufzeichnen audiovisueller Inhalte mit programmierter Ausstrahlung nach einem der Ansprüche 1 bis 10, **dadurch gekennzeichnet, dass** es einen vorhergehenden Schritt (80) des Auswählens mehrerer Inhalte, die ein gemeinsames Thema haben, und einen Schritt (82) des Empfangens einer Aufzeichnungsanfragedatei (84), anhand derer das Zugriffsendgerät eine Aufzeichnungsanfrage-Anforderung erzeugt, die dazu bestimmt ist, zu einem vorgegebenen Server (26) ausgesendet zu werden, um den Auswahlschritt (86) automatisch auszuführen, enthält.

12. Verfahren zum Aufzeichnen audiovisueller Inhalte mit programmierter Ausstrahlung nach Anspruch 11, **dadurch gekennzeichnet, dass** die Aufzeichnungsanfragedatei (84) die Adresse des vorgegebenen Servers enthält, um die Aufzeichnungsanfrage-Anforderung zu erzeugen.

13. Verfahren zum Aufzeichnen audiovisueller Inhalte mit programmierter Ausstrahlung nach einem der Ansprüche 1 bis 12, **dadurch gekennzeichnet, dass** die Anforderung zu statistischen Zwecken die Bezugnahme auf einen Anwender enthält.

14. System zum Aufzeichnen audiovisueller Inhalte mit programmierter Ausstrahlung für die Ausführung eines Verfahrens nach einem der Ansprüche 1 bis 13, **dadurch gekennzeichnet, dass** es wenigstens ein Zugriffsendgerät (20) enthält, das Mittel für die Auswahl eines aufzuzeichnenden audiovisuellen Inhalts aufweist, dem ein Datum und eine Uhrzeit der Ausstrahlung zugeordnet sind, wobei das Zugriffsendgerät Mittel zum Empfangen einer Aufzeichnungsdatei (54; 90) des ausgewählten audiovisuellen Inhalts enthält, wobei diese Datei Informationen für die Identifizierung des audiovisuellen Inhalts sowie das Datum und die Uhrzeit, die für seine Ausstrahlung vorgesehen sind, enthält, und dass die Aufzeichnungsdatei außerdem die Adresse eines Aktualisierungsservers (26) enthält, um eine Anforderung zum Aktualisieren der Aufzeichnungsdatei, die von dem Endgerät zu diesem Aktualisierungsserver gesendet wird, zu erzeugen.

15. Aktualisierungsserver (26), der insbesondere für die Ausführung eines Verfahrens nach einem der Ansprüche 1 bis 13 geeignet ist, **dadurch gekennzeichnet, dass** er Mittel zum Aktualisieren der Aufzeichnungsdatei enthält.

16. Zugriffsendgerät (20), das insbesondere für die Ausführung eines Verfahrens nach einem der Ansprüche 1 bis 13 geeignet ist, **dadurch gekennzeichnet, dass** es Mittel zum Auswählen eines aufzuzeichnenden audiovisuellen Inhalts, dem ein Datum und eine Uhrzeit der Ausstrahlung zugeordnet sind, und Mittel zum Empfangen einer Aufzeichnungsdatei für den ausgewählten audiovisuellen Inhalt enthält, wobei diese Datei Informationen für die Identifizierung des audiovisuellen Inhalts sowie das Datum und die Uhrzeit, die für seine Ausstrahlung vorgesehen sind, enthält und außerdem die Adresse eines Aktualisierungsservers enthält, um eine Anforderung zum Aktualisieren der Aufzeichnungsdatei, die von dem Endgerät zu diesem Aktualisierungsserver gesendet wird, zu erzeugen.
